# EUROPEAN PATENT SPECIFICATION

(11) **EP 3 119 040 B1**
(45) Date of publication and mention of the grant of the patent: **19.09.2018**
(21) Application number: 16164354.9
(22) Date of filing: 08.04.2016
(51) Int. Cl.: H04L 12/28, H04N 21/41

(54) **METHOD AND DEVICE FOR CONTROLLING A SMART DEVICE**
VERFAHREN UND VORRICHTUNG ZUR STEUERUNG EINER INTELLIGENTEN VORRICHTUNG
PROCÉDÉ ET APPAREIL DE COMMANDE D'UN DISPOSITIF INTELLIGENT

(30) Priority: 13.07.2015 CN 201510408868
(43) Date of publication of application: 18.01.2017
(73) Proprietor: Xiaomi Inc., Beijing 100085 (CN)
(72) Inventor: WANG, Yuanbo, Beijing 100085 (CN); REN, Qiao, Beijing 100085 (CN); HOU, Enxing, Beijing 100085 (CN)
(74) Representative: Delumeau, François Guy

(56) References cited:
- WO-A1-2009/143608
- KR-A- 20150 072 766
- US-A1- 2012 127 011
- US-A1- 2012 173 767
- US-A1- 2014 156 082

## Description

### TECHNICAL FIELD

The present disclosure generally relates to the technical field of smart devices, and more particularly, to a method and a device for controlling a smart device.

### BACKGROUND

With the development of smart devices and Internet technology, more and more smart devices can be controlled remotely via a network.

In order to achieve the remote control, a remote control application is typically adopted to monitor and control the smart devices. The user can conduct personalized settings based on the options provided by the application. For example, a status display interface for an air purifier can be set as having a color varying with the quality of the air. However, other users connected to the air purifier can be presented with just a common control interface.
US 2012/0127011 discloses a remote control method applied to a remote control system, including a remote control device and at least one be-controlled device, the method including the following steps: The remote control device discovers the at least one be-controlled device dynamically via a network and retrieves a device control profile from the at least one be-controlled device. The device control profile includes a composite finite state machine representing the dependency of various operation states of the at least one be-controlled device and multiple control codes coded in a bit-string format. Then the remote control device retrieves a current operation state code from the at least one be-controlled device via the network periodically. The remote control device analyzes the current operation state code based on the device control profile to accordingly generate a user interface to control the at least one be-controlled device.
US 2012/0173767 discloses a method for remotely controlling peripheral devices in a mobile communication terminal includes acquiring a profile for a controlled peripheral device, configuring a control application for the controlled peripheral device based on the acquired profile, and controlling the controlled peripheral device using the configured control application.
WO 2009/143608 discloses a method and apparatus for controlling a display unit using a portable processing device.
US 2014/156082 A1 discloses a home appliance which can communicate with an outside of the home appliance and an online system including the same.

### SUMMARY

The present invention is defined in the appended independent claims to which reference should be made. Advantageous features are set out in the appended dependent claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for controlling a smart device according to an exemplary embodiment.
Fig. 2 is a flow chart of a method for controlling a smart device according to an exemplary embodiment.
Fig. 3 is a flow chart of a method for controlling a smart device according to an exemplary embodiment.
Fig. 4 is a block diagram of a device for controlling a smart device according to an exemplary embodiment.
Fig. 5 is a block diagram of a first detection module in the device for controlling a smart device according to an exemplary embodiment.
Fig. 6 is a block diagram of an acquisition module in the device for controlling a smart device according to an exemplary embodiment.
Fig. 7 is a block diagram of a first generation module in the device for controlling a smart device according to an exemplary embodiment.
Fig. 8 is a block diagram of a device for controlling a smart device according to an exemplary embodiment (a general structure of a mobile terminal).

### DETAILED DESCRIPTION

The objectives, technical solutions and advantages of the present disclosure will become more apparent, through a further detailed description given below to embodiments of the present disclosure in conjunction with the accompanying drawings.

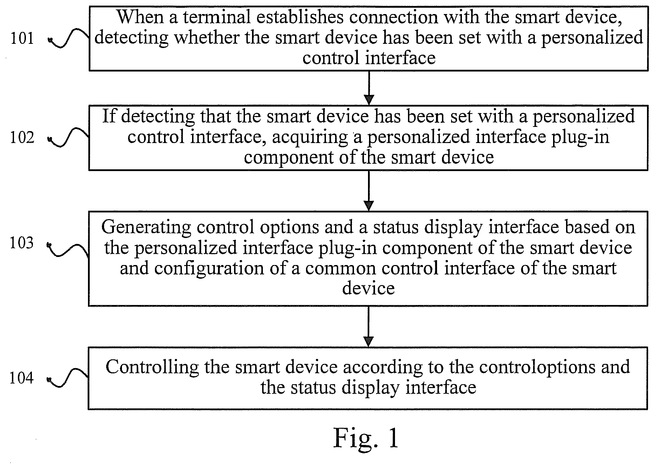

An exemplary embodiment of the present disclosure provides a method for controlling a smart device, which is applied in a terminal. Referring to Fig. 1, the method includes the following steps:
in step 101, when the terminal establishes connection with the smart device, it is detected whether the smart device has been set with a personalized control interface;
in step 102, if it is detected that the smart device has been set with a personalized control interface, a personalized interface plug-in component of the smart device is acquired, the personalized interface plug-in component of the smart device containing a personalized function and a personalized status display;
in step 103, control options and a status display interface are generated based on the personalized interface plug-in component of the smart device and configuration of a common control interface of the smart device; and
in step 104, the smart device is controlled based on the control options and the status display interface.

In the embodiment of the present disclosure, a framework control application is installed in advance in the terminal, and the user can employ the application to assist the smart device to connect to a network. After it is connected to the network, the smart device will establish connection with the terminal, and generate a control interface for controlling the smart device after the connection is established, wherein the control interface contains control options and a status display interface.

Optionally, the framework control application can include a device display list in which identifications of display interfaces corresponding to various types of smart devices connected with the terminal are stored as entry options for controlling the smart devices. Wherein, the device display list in the framework control application can store entry options for one or more smart devices. The user can select one of the smart devices and confirms the connection, and then enters the control interface corresponding to the smart device after the confirmation of the connection.

Wherein, the framework application includes icons and corresponding control commands for generating control options corresponding to various functions in the control-and-status-display interface of the smart device, as well as various display widgets.

In the embodiment of the present disclosure, the smart device is already connected to the network, and another terminal (other than the terminal described above in the present embodiment) which has assisted the smart device to connect to the network has previously set a personalized control interface for the smart device. The personalized control interface can include a personalized control option and a personalized status display interface. The personalized control option and the personalized status display interface can be a configuration previously stored in the framework application, and the framework application provides previously stored personalized configuration options for the user to select among them to conduct personalized settings.

For example, for a smart camera, a control option can be set as when an object moves in front of the camera the camera will be controlled to automatically start up. For a smart air purifier, a status display interface can be set as having a background color varying with the quality of the air.

After the user sets a personalized control interface in another terminal, a personalized interface plug-in component will be generated based on a control option and the status display interface which have been set in the personalized control interface, and the personalized interface plug-in component will be sent to the smart device to be stored there or sent to a cloud server to be stored there. Wherein, the personalized interface plug-in component of the smart device contains a personalized function corresponding to the personalized control option, and a personalized status display corresponding to the personalized status display interface.

In the present embodiment of the present disclosure, when the terminal establishes connection with the smart device, it is detected whether the smart device has been set with a personalized control interface; if it is detected that the smart device has been set with a personalized control interface, a personalized interface plug-in component of the smart device is acquired; control options and a status display interface are generated based on the personalized interface plug-in component of the smart device and configuration of a common control interface of the smart device; and the smart device is controlled based on the control options and the status display interface. Thereby, it achieves a control manner in which multiple terminals can share a personalized control interface to control a smart device, and thus the control efficiency and human-machine interaction can be improved.

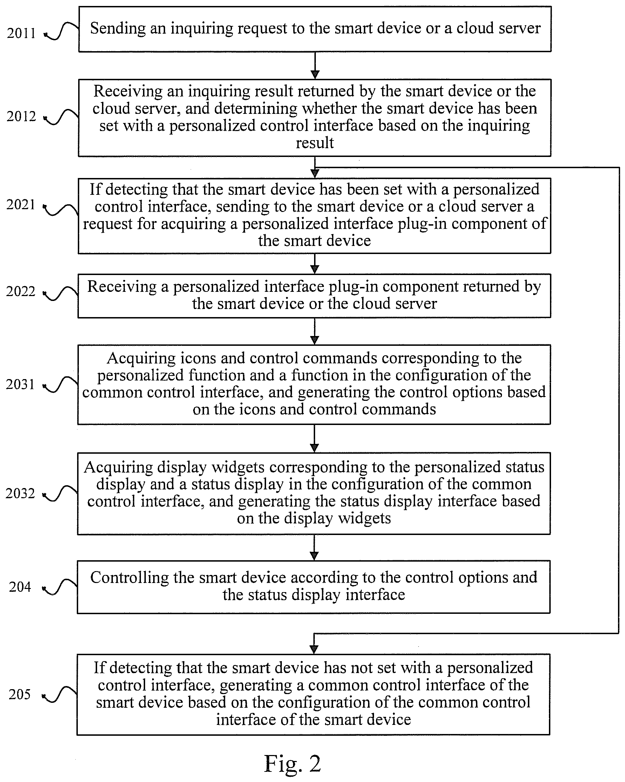

An exemplary embodiment of the present disclosure provides a method for controlling a smart device, which is applied in a terminal. Referring to Fig. 2, the method includes the following steps.

In a step, when the terminal establishes connection with the smart device, it is detected whether the smart device has been set with a personalized control interface.

In the present embodiment, the terminal and the smart device can be at the same location, or the terminal and the smart device can be at different locations. For example, the smart device is a smart air conditioner which is positioned at the user's home, while the terminal carried by the user may be at home, in which case the terminal and the smart device are at the same location, or the terminal carried by the user may be at his company, in which case the terminal and the smart device are not at the same location.

If the terminal and the smart device are at the same location, operations such as the connection between the terminal and the smart device, transmission of control commands and transmission of status data or the like, can be performed by transmitting data via the network device connected to both of the terminal and the smart device. The above operations can also be performed through transmission by establishing a direct connection between the terminal and smart device. Wherein the direct connection can include but not limited to Blue Tooth, Wi-Fi (Wireless Fidelity) or the like.

If the terminal and the smart device are not at the same location, a cloud server can be taken as a relay between the terminal and the smart device to perform the operations such as connecting the terminal and the smart device, transmitting control commands, transmitting status data, or the like.

In the embodiment of the present disclosure, the detection in this step is generally triggered at a first time when the terminal and the smart device are connected.

Depending on the connection manners between the terminal and the smart device as described above, the detection can be performed in different manners accordingly. Thus, the above step of detecting whether the smart device has been set with a personalized control interface can be implemented as the following steps.

In step 2011, an inquiring request is sent to the smart device or a cloud server.

Wherein, in this step, when the inquiring request is sent to the cloud server, the inquiring request is required to carry with an identification of the smart device, for the cloud server to perform the inquiring operation based on the identification of the smart device.

If a personalized interface plug-in component is detected as stored in the register of the smart device, or a personalized interface plug-in component corresponding to the smart device is detected as stored in the cloud server, it can be determined that the smart device has been set with a personalized control interface.

In step 2012, an inquiring result returned by the smart device or the cloud server is received, and it is determined whether the smart device has been set with a personalized control interface based on the inquiring result.

Based on the inquiring result, if the smart device has set with a personalized control interface, a step described in the next paragraph is performed; and if the smart device has not been set with a personalized control interface, the step 205 is performed.

In a step, if it is detected that the smart device has been set with a personalized control interface, a personalized interface plug-in component of the smart device is acquired, the personalized interface plug-in component of the smart device containing a personalized function and a personalized status display.

Wherein, depending on the connection manners between the terminal and the smart device as described above, the acquisition in this step can be performed in different manners accordingly. Thus, the above step of acquiring a personalized interface plug-in component of the smart device can be implemented as the following steps.

In step 2021, if it is detected that the smart device has been set with a personalized control interface, a request for acquiring a personalized interface plug-in component of the smart device is sent to the smart device or a cloud server.

Wherein, in this step, when the request for acquiring a personalized interface plug-in component of the smart device is sent to the cloud server, the request for acquiring a personalized interface plug-in component of the smart device is required to carry with the identification of the smart device, for the cloud server to perform the acquisition operation based on the identification of the smart device.

In step 2022, a personalized interface plug-in component returned by the smart device or the cloud server is received.

Optionally, since in setting a personalized control interface, a user can only set a personalized control option or a personalized status display interface, the personalized interface plug-in component can contain a personalized function and/or a personalized status display.

Optionally, when it determines that the smart device has been set with a personalized control interface, the terminal notifies the user that the smart device has been set with a personalized control interface by popping out a prompting message in a screen of the terminal, and allows the user to select whether to generate a personalized control interface or generate a common control interface by setting options in the prompting message.

When the user selects to generate a personalized control interface, the above step of acquiring a personalized interface plug-in component of the smart device is performed; and when the user selects to generate a common control interface, a common control interface is generated based on configuration of a common control interface of the smart device.

In a step, control options and a status display interface are generated based on the personalized interface plug-in component of the smart device and configuration of a common control interface of the smart device.

Wherein, the configuration of a common control interface of the smart device can be saved in the framework control application of the smart device, or can be stored in the smart device or a cloud server. Correspondingly, depending on whether the configuration of the common control interface of the smart device is saved in the smart device or the cloud server, the acquisition is similar to the acquisition of the personalized interface plug-in component, which will not be repeated herein. Wherein, the configuration of the common control interface can contain a function and a status display.

In the embodiment of the present disclosure, the control options in the control interface for controlling the smart device are generated based on the function in the personalized interface plug-in component and the function in configuration of the common control interface. Accordingly, generation of the control options in the above step of generating control options and a status display interface is implemented as step 2031.

In addition, the status display interface in the control interface for controlling the smart device are generated based on the status display in the personalized interface plug-in component and the status display in the configuration of the common control interface. Accordingly, generation of the status display interface in the above step of generating control options and a status display interface is implemented as step 2032.

In step 2031, icons and control commands corresponding to the personalized function and the function in the configuration of the common control interface are acquired, and the control options are generated based on the icons and control commands.

For example, for a smart air purifier, a function in a common control interface of the smart air purifier can include but not limited to: turn on/turn off, mode selection and/or night mode. A personalized function of the smart air purifier can be a customized start-up time control.

The framework control application of the terminal is previously stored with icons and control commands corresponding to various functions, and the control options for controlling the smart device can be generated in the control interface by acquiring the icons and control commands corresponding to the functions one by one.

Accordingly, four control options of turn on/turn off, mode selection, night mode and/or customized start-up time control are generated in the control interface.

In step 2032, display widgets corresponding to the personalized status display and the status display in the configuration of the common control interface are acquired, and the status display interface is generated based on the display widgets.

The framework control application of the terminal is previously stored with display widgets corresponding to various types of status displays. Wherein, a display widget includes a data input interface for acquiring a status parameter corresponding to the type of the status display. Through the data input interface, a request for acquiring a status parameter is sent to the smart device and a status parameter returned by the smart device is received. The terminal can receive various status parameters returned by the smart device through a direct connection or over a network.

In addition, the personalized status display can conflict with the status display in the configuration of the common control interface. For example, for the smart air purifier, the personalized status display corresponds to a display widget having a background color varying with the quality of the air, while the status display in the configuration of the common control interface corresponds to a display widget for displaying the quality of the air with a fixed color. These two display widgets belong to the same type.

During the generation of the status display interface, the type of the display widget corresponding to the personalized status display is to be compared with the type of the display widget corresponding to the status display in the configuration of the common control display. If they belong to the same type, a corresponding display widget is acquired only based on the personalized status display, and then the status display interface is generated accordingly. If they do not belong to the same type, corresponding display widgets are respectively acquired based on the personalized status display and the status display in the configuration of the common control interface, and then the status display interface is generated based on the display widgets.

In step 204, the smart device is controlled according to the control options and the status display interface.

After the control-and-status-display interface is generated, the user can perform control operations of the various functions in the control-and-status-display interface. Accordingly, the smart device is controlled to send corresponding control command to the smart device according to the control option selected by the user.

In step 205, if it is detected that the smart device has not been set with a personalized control interface, a common control interface of the smart device is generated based on the configuration of the common control interface of the smart device.

Wherein, the common control interface includes the control interface and the status display interface, generated respectively based on the functions in the configuration of the common control interface and the status display in the configuration of the common control interface. Wherein, the generation can be implemented through the following steps.

Icons and control commands corresponding to function of the configuration of the common control interface are acquired, and control options corresponding to the functions are generated in a control region of the interface;
a display widget corresponding to the status display of the configuration of the common control interface is acquired, and the display widget includes a data input interface for acquiring a status parameter corresponding to the status display; and
the display widget is loaded in the status display region, and the status display interface of the smart device is generated.

In the present embodiment of the present disclosure, when the terminal establishes connection with the smart device, it is detected whether the smart device has been set with a personalized control interface; if it is detected that the smart device has been set with a personalized control interface, a personalized interface plug-in component of the smart device is acquired; control options and a status display interface are generated based on the personalized interface plug-in component of the smart device and configuration of a common control interface of the smart device; and the smart device is controlled based on the control options and the status display interface. Thereby, it achieves a control manner in which multiple terminals can share a personalized control interface to control a smart device, and thus the control efficiency and human-machine interaction can be improved.

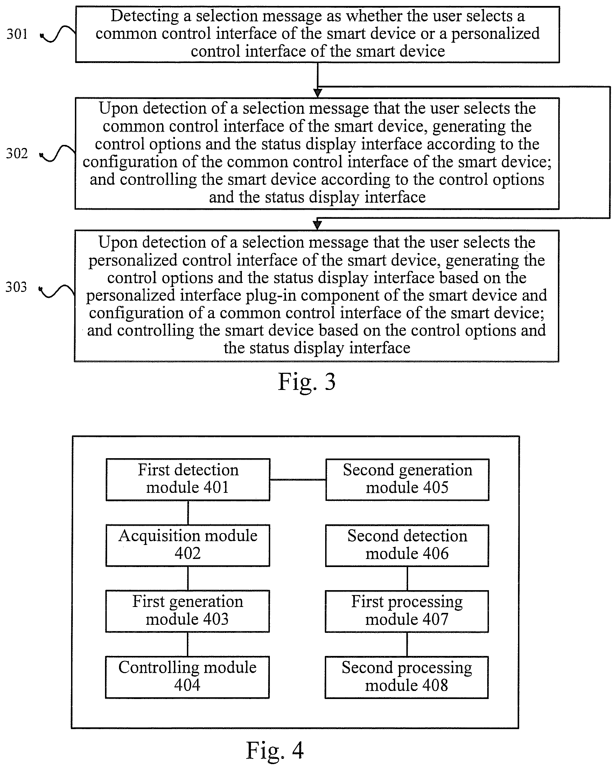

Referring to Fig. 3, an exemplary embodiment of the present disclosure provides a method for controlling a smart device, which is applied in a terminal.

It should be noted that, in an embodiment of the present disclosure, a control interface of the smart device corresponding to the user requirement is generated through a manner selected by the user in the framework control application.

Wherein, the method includes the following steps.

In step 301, a selection message is detected as whether the user selects a common control interface of the smart device or a personalized control interface of the smart device.

Wherein, before it generates the control interface of the smart device, if it is detected that the smart device has been set with a personalized control interface, the framework control application can present a prompting message to the user, for the user to select to generate a common control interface or a personalized control interface.

Wherein, the prompting message can be a prompting dialog box provided with an option of a common control interface and an option of a personalized control interface respectively. A selection message will be generated after the user selects one of the options. Wherein, the selection message contains an identification of a control interface (an identification of the common control interface or an identification of the personalized control interface) selected by the user in the prompting dialog box.

In step 302, upon detection of a selection message that the user selects the common control interface of the smart device, the control options and the status display interface are generated according to the configuration of the common control interface of the smart device; and the smart device is controlled according to the control options and the status display interface.

In step 303, upon detection of a selection message that the user selects the personalized control interface of the smart device, the control options and the status display interface are generated based on the personalized interface plug-in component of the smart device and configuration of a common control interface of the smart device; and the smart device is controlled based on the control options and the status display interface.

Wherein, the generation of the common control interface or the personalized control interface in steps 302 and 303 can be referred to the above embodiments, which will not be repeated herein.

In the present embodiment of the present disclosure, when the terminal establishes connection with the smart device, a corresponding control interface is generated by detecting a selection message as which control interface the user selects, and the smart device is controlled according to the generated control interface. Thereby, it generates various control interfaces to control the smart device, facilitates the user to select the control manner needed by himself as needed, and thus the control efficiency and human-machine interaction can be improved.

Corresponding to the method for controlling a smart device in the above exemplary embodiments, another exemplary embodiment of the present disclosure provides a device for controlling a smart device, which is applied in a terminal. Referring to Fig. 4, the device includes:
a first detection module 401 configured to, when a terminal establishes connection with the smart device, detect whether the smart device has been set with a personalized control interface;
an acquisition module 402 configured to, if it is detected that the smart device has been set with a personalized control interface, acquire a personalized interface plug-in component of the smart device, the personalized interface plug-in component of the smart device containing a personalized function and a personalized status display;
a first generation module 403 configured to, generate control options and a status display interface based on the personalized interface plug-in component of the smart device and configuration of a common control interface of the smart device; and
a controlling module 404 configured to control the smart device according to the control options and the status display interface.

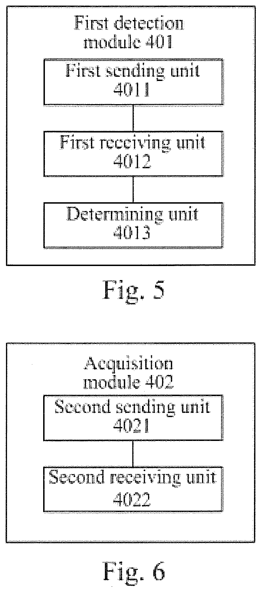

Wherein, as shown in Fig. 5, the first detection module 401 includes:
a first sending unit 4011 configured to send an inquiring request to the smart device or a cloud server;
a first receiving unit 4012 configured to receive an inquiring result returned by the smart device or the cloud server, and
a determining unit 4013 configured to determine whether the smart device has been set with a personalized control interface based on the inquiring result.

Wherein, as shown in Fig. 6, the acquisition module 402 includes:
a second sending unit 4021 configured to send to the smart device or a cloud server a request for acquiring a personalized interface plug-in component of the smart device; and
a second receiving unit 4022 configured to receive a personalized interface plug-in component returned by the smart device or the cloud server.

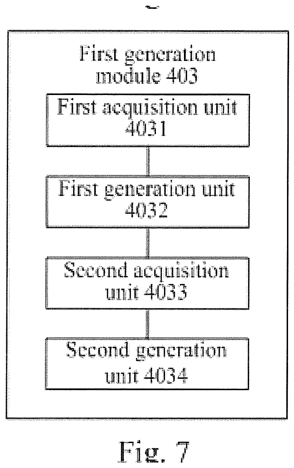

Wherein, as shown in Fig. 7, the first generation module 403 includes:
a first acquisition unit 4031 configured to acquire icons and control commands corresponding to the personalized function and a function in the configuration of the common control interface;
a first generation unit 4032 configured to generate the control options based on the icons and control commands;
a second acquisition unit 4033 configured to acquire display widgets corresponding to the personalized status display and a status display in the configuration of the common control interface; and
a second generation unit 4034 configured to generate the status display interface based on the display widgets.

As shown in Fig.4, the device further includes:
a second generation module 405 configured to, if it is detected that the smart device has not set with a personalized control interface, generate a common control interface of the smart device based on the configuration of the common control interface of the smart device.

As shown in Fig.4, the device further includes:
a second detection module 406 configured to detect a selection message as whether the user selects a common control interface of the smart device or a personalized control interface of the smart device;
a first processing module 407 configured to, upon detection of a selection message that the user selects the common control interface of the smart device, generate the control options and the status display interface according to the configuration of the common control interface of the smart device; and control the smart device according to the control options and the status display interface; and
a second processing module 408 configured to, upon detection of a selection message that the user selects the personalized control interface of the smart device, generate the control options and the status display interface based on the personalized interface plug-in component of the smart device and configuration of a common control interface of the smart device; and control the smart device based on the control options and the status display interface.

In the present embodiment of the present disclosure, when the terminal establishes connection with the smart device, it is detected whether the smart device has been set with a personalized control interface; if it is detected that the smart device has been set with a personalized control interface, a personalized interface plug-in component of the smart device is acquired; control options and a status display interface are generated based on the personalized interface plug-in component of the smart device and configuration of a common control interface of the smart device; and the smart device is controlled based on the control options and the status display interface. Thereby, it achieves a control manner in which multiple terminals can share a personalized control interface to control a smart device, and thus the control efficiency and human-machine interaction can be improved.

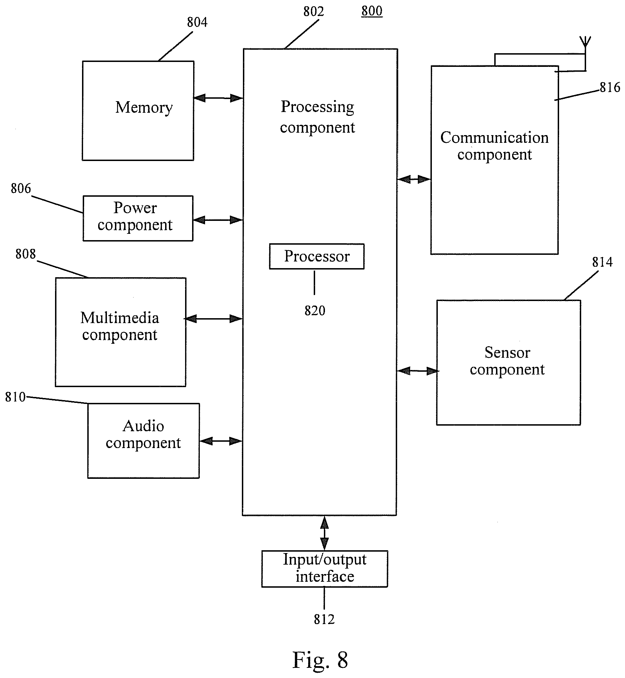

Corresponding to the device for controlling a smart device provided by the above exemplary embodiments, another exemplary embodiment of the present disclosure provides a terminal 800, as shown in Fig. 8. For example, the terminal 800 may be a mobile phone, a computer, a digital broadcast terminal, a messaging device, a gaming console, a tablet, a medical device, exercise equipment, a personal digital assistant, a terminal and the like. Optionally, the terminal 800 may also be a smart router, a smart air purifier, a smart water dispenser, a smart camera and the like.

Referring to Fig. 8, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal 800, for performing the above-described methods. For example, the non-transitory computer-readable storage medium may be a ROM, a RAM, a CD-ROM, a magnetic tape, a floppy disc, an optical data storage device, and the like.

In the present embodiment of the present disclosure, when the terminal establishes connection with the smart device, it is detected whether the smart device has been set with a personalized control interface; if it is detected that the smart device has been set with a personalized control interface, a personalized interface plug-in component of the smart device is acquired; control options and a status display interface are generated based on the personalized interface plug-in component of the smart device and configuration of a common control interface of the smart device; and the smart device is controlled based on the control options and the status display interface. Thereby, it achieves a control manner in which multiple terminals can share a personalized control interface to control a smart device, and thus the control efficiency and human-machine interaction can be improved.

## Claims

1. A method for use in a terminal for controlling a smart device, the method comprising:
when the terminal establishes connection with the smart device, detecting (101) whether the smart device has been set with a personalized control interface;
when detecting that the smart device has been set with a personalized control interface, acquiring (102) a personalized interface plug-in component of the smart device, the personalized interface plug-in component of the smart device containing a personalized function and a personalized status display;
generating (103) control options and a status display interface based on the personalized interface plug-in component of the smart device and configuration of a common control interface of the smart device; and
controlling (104, 204) the smart device according to the control options and the status display interface;
wherein generating (103) control options and a status display interface includes:
detecting (301) a selection message as whether the user selects the common control interface of the smart device or the personalized control interface of the smart device ;
upon detection of a selection message that the user selects the common control interface of the smart device, generating (302) the control options and the status display interface according to the configuration of the common control interface of the smart device ;
and upon detection of a selection message that the user selects the personalized control interface of the smart device, generating (303) the control options and the status display interface based on the personalized interface plug-in component of the smart device and the configuration of the common control interface of the smart device.

2. The method according to claim 1, wherein detecting whether the smart device has been set with a personalized control interface comprises:
sending (2011) an inquiring request to the smart device or a cloud server;
receiving (2012) an inquiring result returned by the smart device or the cloud server, and determining whether the smart device has been set with a personalized control interface based on the inquiring result.

3. The method according to claim 1 or 2, wherein acquiring a personalized interface plug-in component of the smart device comprises:
sending (2021) to the smart device or a cloud server a request for acquiring a personalized interface plug-in component of the smart device; and
receiving (2022) a personalized interface plug-in component returned by the smart device or the cloud server.

4. The method according to claim 1, wherein generating control options and a status display interface based on the personalized interface plug-in component of the smart device and configuration of a common control interface of the smart device, comprises:
acquiring (2031) icons and control commands corresponding to the personalized function and a function in the configuration of the common control interface, and generating the control options based on the icons and control commands; and
acquiring (2032) display widgets corresponding to the personalized status display and a status display in the configuration of the common control interface, and generating the status display interface based on the display widgets.

5. The method according to claim 1, wherein, after the step of detecting whether the smart device has been set with a personalized control interface, the method further comprises: when detecting that the smart device has not set with a personalized control interface, generating (205) a common control interface of the smart device based on the configuration of the common control interface of the smart device.

6. A device for controlling a smart device, the device comprising:
a first detection module (401) configured to, when the device establishes connection with the smart device, detect whether the smart device has been set with a personalized control interface;
an acquisition module (402) configured to, when it is detected that the smart device has been set with a personalized control interface, acquire a personalized interface plug-in component of the smart device, the personalized interface plug-in component of the smart device containing a personalized function and a personalized status display;
a first generation module (403) configured to, generate control options and a status display interface based on the personalized interface plug-in component of the smart device and configuration of a common control interface of the smart device; and
a controlling module (404) configured to control the smart device according to the control options and the status display interface,
the device further comprising:
a second detection module (406) configured to detect a selection message as whether the user selects the common control interface of the smart device or the personalized control interface of the smart device;
a first processing module (407) configured to, upon detection of a selection message that the user selects the common control interface of the smart device, generate the control options and the status display interface according to the configuration of the common control interface of the smart device; and control the smart device according to the control options and the status display interface; and
a second processing module (408) configured to, upon detection of a selection message that the user selects the personalized control interface of the smart device, generate the control options and the status display interface based on the personalized interface plug-in component of the smart device and the configuration of the common control interface of the smart device; and control the smart device based on the control options and the status display interface.

7. The device according to claim 6, wherein the first detection module (401) comprises:
a first sending unit (4011) configured to send an inquiring request to the smart device or a cloud server;
a first receiving unit (4012) configured to receive an inquiring result returned by the smart device or the cloud server, and
a determining unit (4013) configured to determine whether the smart device has been set with a personalized control interface based on the inquiring result.

8. The device according to claim 6 or 7, wherein the acquisition module (402) comprises:
a second sending unit (4021) configured to send to the smart device or a cloud server a request for acquiring a personalized interface plug-in component of the smart device; and
a second receiving unit (4022) configured to receive a personalized interface plug-in component returned by the smart device or the cloud server.

9. The device according to claim 6, wherein the first generation module (403) comprises:
a first acquisition unit (4031) configured to acquire icons and control commands corresponding to the personalized function and a function in the configuration of the common control interface;
a first generation unit (4032) configured to generate the control options based on the icons and control commands;
a second acquisition unit (4033) configured to acquire display widgets corresponding to the personalized status display and a status display in the configuration of the common control interface; and
a second generation unit (4034) configured to generate the status display interface based on the display widgets.

10. The device according to claim 6, wherein, the device further comprises:
a second generation module (405) configured to, when it is detected that the smart device has not set with a personalized control interface, generate a common control interface of the smart device based on the configuration of the common control interface of the smart device.

11. The device according to claim 6, wherein the device comprises:
a processor (820); and
a memory (804) for storing instructions executable by the processor;
wherein the processor is configured to implement the first detection module (401), the acquisition module (402), the first generation module (403) and the controlling module (404) by performing the functions of said modules.

12. A computer program comprising instructions which, when the program is executed by a computer, cause the computer to carry out all the steps of the method according to any of claims 1 to 5.

13. A recording medium readable by a computer and having recorded thereon the computer program of claim 12.

## Patentansprüche

1. Verfahren zur Verwendung in einem Endgerät zur Steuerung einer intelligenten Vorrichtung, wobei das Verfahren umfasst:
wenn das Endgerät eine Verbindung mit der intelligenten Vorrichtung herstellt, Erkennen (101), ob die intelligente Vorrichtung mit einer personalisierten Steuerschnittstelle eingerichtet worden ist,
wenn erkannt wird, dass die intelligente Vorrichtung mit einer personalisierten Steuerschnittstelle eingerichtet worden ist, Erfassen (102) einer personalisierten Schnittstellen-Plug-In-Komponente der intelligenten Vorrichtung, wobei die personalisierte Schnittstellen-Plug-In-Komponente der intelligenten Vorrichtung eine personalisierte Funktion und eine personalisierte Statusanzeige enthält,
Erzeugen (103) von Steueroptionen und einer Statusanzeigenschnittstelle basierend auf der personalisierten Schnittstellen-Plug-In-Komponente der intelligenten Vorrichtung und einer Konfiguration einer gemeinsamen Steuerschnittstelle der intelligenten Vorrichtung und
Steuern (104, 204) der intelligenten Vorrichtung gemäß den Steueroptionen und der Statusanzeigenschnittstelle,
wobei das Erzeugen (103) von Steueroptionen und einer Statusanzeigenschnittstelle aufweist:
Erkennen (301) einer Auswahlnachricht, ob der Benutzer die gemeinsame Steuerschnittstelle der intelligenten Vorrichtung oder die personalisierte Steuerschnittstelle der intelligenten Vorrichtung auswählt,
auf das Erkennen einer Auswahlnachricht, dass der Benutzer die gemeinsame Steuerschnittstelle der intelligenten Vorrichtung auswählt, Erzeugen (302) der Steueroptionen und der Statusanzeigenschnittstelle gemäß der Konfiguration der gemeinsamen Steuerschnittstelle der intelligenten Vorrichtung,
auf das Erkennen einer Auswahlnachricht, dass der Benutzer die personalisierte Steuerschnittstelle der intelligenten Vorrichtung auswählt, Erzeugen (303) der Steueroptionen und der Statusanzeigenschnittstelle basierend auf der personalisierten Schnittstellen-Plug-In-Komponente der intelligenten Vorrichtung und der Konfiguration der gemeinsamen Steuerschnittstelle der intelligenten Vorrichtung.

2. Verfahren nach Anspruch 1, wobei das Erkennen, ob die intelligente Vorrichtung mit einer personalisierten Steuerschnittstelle eingerichtet worden ist, umfasst:
Senden (2011) einer anfragenden Anfrage an die intelligente Vorrichtung oder an einen Cloud-Server,
Empfangen (2012) eines Anfrageergebnisses, das von der intelligenten Vorrichtung oder dem Cloud-Server zurückgegeben wird, und Bestimmen, ob die intelligente Vorrichtung mit einer personalisierten Steuerschnittstelle eingerichtet worden ist basierend auf dem Anfrageergebnis.

3. Verfahren nach Anspruch 1 oder 2, wobei das Erfassen einer personalisierten Schnittstellen-Plug-in-Komponente der intelligenten Vorrichtung umfasst:
Senden (2021) einer Anfrage zum Erfassen einer personalisierten Schnittstellen-Plug-in-Komponente der intelligenten Vorrichtung an die intelligente Vorrichtung oder einen Cloud-Server und
Empfangen (2022) einer personalisierten Schnittstellen-Plug-in-Komponente, die von der intelligenten Vorrichtung oder dem Cloud-Server zurückgegeben wird.

4. Verfahren nach Anspruch 1, wobei das Erzeugen von Steueroptionen und einer Statusanzeigenschnittstelle basierend auf der personalisierten Schnittstellen-Plug-In-Komponente der intelligenten Vorrichtung und einer Konfiguration einer gemeinsamen Steuerschnittstelle der intelligenten Vorrichtung umfasst:
Erfassen (2031) von Symbolen und Steuerbefehlen, die der personalisierten Funktion und einer Funktion in der Konfiguration der gemeinsamen Steuerschnittstelle entsprechen, und Erzeugen der Steueroptionen basierend auf den Symbolen und den Steuerbefehlen und
Erfassen (2032) von Anzeigen-Widgets, die der personalisierten Statusanzeige entsprechen, und einer Statusanzeige in der Konfiguration der gemeinsamen Steuerschnittstelle und Erzeugen der Statusanzeigenschnittstelle basierend auf den Anzeigen-Widgets.

5. Verfahren nach Anspruch 1, wobei nach dem Schritt des Erkennens, ob die intelligente Vorrichtung mit einer personalisierten Steuerschnittstelle eingestellt worden ist, das Verfahren ferner umfasst:
wenn erkannt wird, dass die intelligente Vorrichtung nicht mit einer personalisierten Steuerschnittstelle eingestellt worden ist, Erzeugen (205) einer gemeinsamen Steuerschnittstelle der intelligenten Vorrichtung basierend auf der Konfiguration der gemeinsamen Steuerschnittstelle der intelligenten Vorrichtung.

6. Vorrichtung zur Steuerung einer intelligenten Vorrichtung, wobei die Vorrichtung umfasst:
ein erstes Erkennungsmodul (401), das konfiguriert ist, wenn die Vorrichtung eine Verbindung mit der intelligenten Vorrichtung herstellt, zu erkennen, ob die intelligente Vorrichtung mit einer personalisierten Steuerschnittstelle eingerichtet worden ist,
ein Erfassungsmodul (402), das konfiguriert ist, wenn erkannt wird, dass die intelligente Vorrichtung mit einer personalisierten Steuerschnittstelle eingestellt worden ist, eine personalisierte Schnittstellen-Plug-In-Komponente der intelligenten Vorrichtung zu erfassen, wobei die personalisierte Schnittstellen-Plug-In-Komponente der intelligenten Vorrichtung eine personalisierte Funktion und eine personalisierte Statusanzeige enthält,
ein erstes Erzeugungsmodul (403), das konfiguriert ist, Steueroptionen und eine Statusanzeigenschnittstelle basierend auf der personalisierten Schnittstellen-Plug-in-Komponente der intelligenten Vorrichtung und einer Konfiguration einer gemeinsamen Steuerschnittstelle der intelligenten Vorrichtung zu erzeugen, und
ein Steuermodul (404), das konfiguriert ist, die intelligente Vorrichtung gemäß den Steueroptionen und der Statusanzeigenschnittstelle zu steuern,
wobei die Vorrichtung ferner umfasst:
ein zweites Erkennungsmodul (406), das konfiguriert ist, eine Auswahlnachricht, ob der Benutzer die gemeinsame Steuerschnittstelle der intelligenten Vorrichtung oder die personalisierte Steuerschnittstelle der intelligenten Vorrichtung auswählt, zu erkennen,
ein erstes Verarbeitungsmodul (407), das konfiguriert ist, auf ein Erkennen einer Auswahlnachricht, dass der Benutzer die gemeinsame Steuerschnittstelle der intelligenten Vorrichtung auswählt, die Steueroptionen und die Statusanzeigenschnittstelle gemäß der Konfiguration der gemeinsamen Steuerschnittstelle der intelligenten Vorrichtung zu erzeugen, und die intelligente Vorrichtung gemäß den Steueroptionen und der Statusanzeigenschnittstelle zu steuern, und
ein zweites Verarbeitungsmodul (408), das konfiguriert ist, auf ein Erkennen einer Auswahlnachricht, dass der Benutzer die personalisierte Steuerschnittstelle der intelligenten Vorrichtung auswählt, die Steueroptionen und die Statusanzeigenschnittstelle basierend auf der personalisierten Schnittstellen-Plug-in-Komponente der intelligenten Vorrichtung und der Konfiguration der gemeinsamen Steuerschnittstelle der intelligenten Vorrichtung zu erzeugen, und die intelligente Vorrichtung basierend auf den Steueroptionen und der Statusanzeige zu steuern.

7. Vorrichtung nach Anspruch 6, wobei das erste Erkennungsmodul (401) umfasst:
eine erste Sendeeinheit (4011), die konfiguriert ist, eine anfragende Anfrage an die intelligenten Vorrichtung oder einen Cloud-Server zu senden,
eine erste Empfangseinheit (4012), die konfiguriert ist, ein Abfrageergebnis zu empfangen, das von der intelligenten Vorrichtung oder dem Cloud-Server zurückgegeben wird, und
eine Bestimmungseinheit (4013), die konfiguriert ist, basierend auf dem Anfrageergebnis zu bestimmen, ob die intelligente Vorrichtung mit einer personalisierten Steuerschnittstelle eingestellt worden ist.

8. Vorrichtung nach Anspruch 6 oder 7, wobei das Erfassungsmodul (402) umfasst:
eine zweite Sendeeinheit (4021), die konfiguriert ist, eine Anfrage zum Erfassen einer personalisierten Schnittstellen-Plug-in-Komponente der intelligenten Vorrichtung an die intelligente Vorrichtung oder einen Cloud-Server zu senden, und
eine zweite Empfangseinheit (4022), die konfiguriert ist, eine personalisierte Schnittstellen-Plug-in-Komponente zu empfangen, die von der intelligenten Vorrichtung oder dem Cloud-Server zurückgegeben wird.

9. Vorrichtung nach Anspruch 6, wobei das erste Erzeugungsmodul (403) umfasst:
eine erste Erfassungseinheit (4031), die konfiguriert ist, Symbole und Steuerbefehle, die der personalisierten Funktion und einer Funktion in der Konfiguration der gemeinsamen Steuerschnittstelle entsprechen, zu erfassen,
eine erste Erzeugungseinheit (4032), die konfiguriert ist, die Steueroptionen basierend auf den Symbolen und Steuerbefehlen zu erzeugen,
eine zweite Erfassungseinheit (4033), die konfiguriert ist, Anzeigen-Widgets, die der personalisierten Statusanzeige und einer Statusanzeige in der Konfiguration der gemeinsamen Steuerschnittstelle entsprechen, zu erfassen, und
eine zweite Erzeugungseinheit (4034), die konfiguriert ist, die Statusanzeigenschnittstelle basierend auf den Anzeigen-Widgets zu erzeugen.

10. Vorrichtung nach Anspruch 6, wobei die Vorrichtung ferner umfasst:
ein zweites Erzeugungsmodul (405), das konfiguriert ist, wenn erkannt wird, dass die intelligente Vorrichtung nicht mit einer personalisierten Steuerschnittstelle eingestellt worden ist, basierend auf der Konfiguration der gemeinsamen Steuerschnittstelle der intelligenten Vorrichtung eine gemeinsame Steuerschnittstelle der intelligenten Vorrichtung zu erzeugen.

11. Vorrichtung nach Anspruch 6, wobei die Vorrichtung umfasst:
einen Prozessor (820) und
einen Speicher (804) zum Speichern von Anweisungen, die von dem Prozessor ausführbar sind,
wobei der Prozessor konfiguriert ist, das erste Erkennungsmodul (401), das Erfassungsmodul (402), das ersten Erzeugungsmodul (403) und das Steuermodul (404) durch Durchführung der Funktionen der Module zu implementieren.

12. Computerprogramm, das Anweisungen umfasst, die, wenn das Programm von einem Computer ausgeführt wird, den Computer veranlassen, alle Schritte des Verfahrens nach einem der Ansprüche 1 bis 5 auszuführen.

13. Aufzeichnungsmedium, das von einem Computer lesbar ist und auf dem das Computerprogramm nach Anspruch 12 aufgezeichnet ist.

## Revendications

1. Procédé destiné à être utilisé dans un terminal pour commander un dispositif intelligent, le procédé comprenant :
lorsque le terminal établit une connexion avec le dispositif intelligent, la détection (101) de si le dispositif intelligent a été réglé avec une interface de commande personnalisée ;
lors de la détection que le dispositif intelligent a été réglé avec une interface de commande personnalisée, l'acquisition (102) d'un composant plug-in d'interface personnalisée du dispositif intelligent, le composant plug-in d'interface personnalisée du dispositif intelligent contenant une fonction personnalisée et un affichage d'état personnalisé ;
la génération (103) d'options de commande et d'une interface d'affichage d'état sur la base du composant plug-in d'interface personnalisée du dispositif intelligent et d'une configuration d'une interface de commande commune du dispositif intelligent ; et
la commande (104, 204) du dispositif intelligent selon les options de commande et l'interface d'affichage d'état ;
dans lequel la génération (103) d'options de commande et d'une interface d'affichage d'état inclut :
la détection (301) d'un message de sélection quant à si l'utilisateur sélectionne l'interface de commande commune du dispositif intelligent ou l'interface de commande personnalisée du dispositif intelligent ;
lors de la détection d'un message de sélection selon lequel l'utilisateur sélectionne l'interface de commande commune du dispositif intelligent, la génération (302) des options de commande et de l'interface d'affichage d'état selon la configuration de l'interface de commande commune du dispositif intelligent ;
et lors de la détection d'un message de sélection selon lequel l'utilisateur sélectionne l'interface de commande personnalisée du dispositif intelligent, la génération (303) des options de commande et de l'interface d'affichage d'état sur la base du composant plug-in d'interface personnalisée du dispositif intelligent et de la configuration de l'interface de commande commune du dispositif intelligent.

2. Procédé selon la revendication 1, dans lequel la détection de si le dispositif intelligent a été réglé avec une interface de commande personnalisée comprend :
l'envoi (2011) d'une demande d'interrogation au dispositif intelligent ou à un serveur de nuage ;
la réception (2012) d'un résultat d'interrogation retourné par le dispositif intelligent ou le serveur de nuage, et la détermination de si le dispositif intelligent a été réglé avec une interface de commande personnalisée sur la base du résultat d'interrogation.

3. Procédé selon la revendication 1 ou 2, dans lequel l'acquisition d'un composant plug-in d'interface personnalisée du dispositif intelligent comprend :
l'envoi (2021) au dispositif intelligent ou à un serveur de nuage d'une demande pour acquérir un composant plug-in d'interface personnalisée du dispositif intelligent ; et
la réception (2022) d'un composant plug-in d'interface personnalisée retourné par le dispositif intelligent ou le serveur de nuage.

4. Procédé selon la revendication 1, dans lequel la génération d'options de commande et d'une interface d'affichage d'état sur la base du composant plug-in d'interface personnalisée du dispositif intelligent et d'une configuration d'une interface de commande commune du dispositif intelligent, comprend :
l'acquisition (2031) d'icônes et d'ordres de commande correspondant à la fonction personnalisée et à une fonction dans la configuration de l'interface de commande commune, et la génération des options de commande sur la base des icônes et des ordres de commande ; et
l'acquisition (2032) de widgets d'affichage correspondant à l'affichage d'état personnalisé et à un affichage d'état dans la configuration de l'interface de commande commune, et la génération de l'interface d'affichage d'état sur la base des widgets d'affichage.

5. Procédé selon la revendication 1, dans lequel, après l'étape de détection de si le dispositif intelligent a été réglé avec une interface de commande personnalisée, le procédé comprend en outre :
lors de la détection que le dispositif intelligent n'a pas été réglé avec une interface de commande personnalisée, la génération (205) d'une interface de commande commune du dispositif intelligent sur la base de la configuration de l'interface de commande commune du dispositif intelligent.

6. Dispositif pour commander un dispositif intelligent, le dispositif comprenant :
un premier module de détection (401) configuré pour, lorsque le dispositif établit une connexion avec le dispositif intelligent, détecter si le dispositif intelligent a été réglé avec une interface de commande personnalisée ;
un module d'acquisition (402) configuré pour, lorsqu'il est détecté que le dispositif intelligent a été réglé avec une interface de commande personnalisée, acquérir un composant plug-in d'interface personnalisée du dispositif intelligent, le composant plug-in d'interface personnalisée du dispositif intelligent contenant une fonction personnalisée et un affichage d'état personnalisé ;
un premier module de génération (403) configuré pour générer des options de commande et une interface d'affichage d'état sur la base du composant plug-in d'interface personnalisée du dispositif intelligent et d'une configuration d'une interface de commande commune du dispositif intelligent ; et
un module de commande (404) configuré pour commander le dispositif intelligent selon les options de commande et l'interface d'affichage d'état,
le dispositif comprenant en outre :
un second module de détection (406) configuré pour détecter un message de sélection quant à si l'utilisateur sélectionne l'interface de commande commune du dispositif intelligent ou l'interface de commande personnalisée du dispositif intelligent ;
un premier module de traitement (407) configuré pour, lors de la détection d'un message de sélection selon lequel l'utilisateur sélectionne l'interface de commande commune du dispositif intelligent, générer les options de commande et l'interface d'affichage d'état selon la configuration de l'interface de commande commune du dispositif intelligent ; et commander le dispositif intelligent selon les options de commande et l'interface d'affichage d'état ; et
un second module de traitement (408) configuré pour, lors de la détection d'un message de sélection selon lequel l'utilisateur sélectionne l'interface de commande personnalisée du dispositif intelligent, générer les options de commande et l'interface d'affichage d'état sur la base du composant plug-in d'interface personnalisée du dispositif intelligent et de la configuration de l'interface de commande commune du dispositif intelligent ; et commander le dispositif intelligent sur la base des options de commande et de l'interface d'affichage d'état.

7. Dispositif selon la revendication 6, dans lequel le premier module de détection (401) comprend :
une première unité d'envoi (4011) configurée pour envoyer une demande d'interrogation au dispositif intelligent ou à un serveur de nuage ;
une première unité de réception (4012) configurée pour recevoir un résultat d'interrogation retourné par le dispositif intelligent ou le serveur de nuage, et
une unité de détermination (4013) configurée pour déterminer si le dispositif intelligent a été réglé avec une interface de commande personnalisée sur la base du résultat d'interrogation.

8. Dispositif selon la revendication 6 ou 7, dans lequel le module d'acquisition (402) comprend :
une seconde unité d'envoi (4021) configurée pour envoyer au dispositif intelligent ou à un serveur de nuage une demande pour acquérir un composant plug-in d'interface personnalisée du dispositif intelligent ; et
une seconde unité de réception (4022) configurée pour recevoir un composant plug-in d'interface personnalisée retourné par le dispositif intelligent ou le serveur de nuage.

9. Dispositif selon la revendication 6, dans lequel le premier module de génération (403) comprend :
une première unité d'acquisition (4031) configurée pour acquérir des icônes et des ordres de commande correspondant à la fonction personnalisée et à une fonction dans la configuration de l'interface de commande commune ;
une première unité de génération (4032) configurée pour générer les options de commande sur la base des icônes et des ordres de commande ;
une seconde unité d'acquisition (4033) configurée pour acquérir des widgets d'affichage correspondant à l'affichage d'état personnalisé et à un affichage d'état dans la configuration de l'interface de commande commune ; et
une seconde unité de génération (4034) configurée pour générer l'interface d'affichage d'état sur la base des widgets d'affichage.

10. Dispositif selon la revendication 6, dans lequel le dispositif comprend en outre :
un second module de génération (405) configuré pour, lorsqu'il est détecté que le dispositif intelligent n'a pas été réglé avec une interface de commande personnalisée, générer une interface de commande commune du dispositif intelligent sur la base de la configuration de l'interface de commande commune du dispositif intelligent.

11. Dispositif selon la revendication 6, dans lequel le dispositif comprend :
un processeur (820) ; et
une mémoire (804) pour stocker des instructions exécutables par le processeur ;
dans lequel le processeur est configuré pour mettre en oeuvre le premier module de détection (401), le module d'acquisition (402), le premier module de génération (403) et le module de commande (404) en effectuant les fonctions desdits modules.

12. Programme d'ordinateur comprenant des instructions qui, lorsque le programme est exécuté par un ordinateur, amènent l'ordinateur à réaliser toutes les étapes du procédé selon l'une quelconque des revendications 1 à 5.

13. Support d'enregistrement lisible par un ordinateur et sur lequel est enregistré le programme d'ordinateur de la revendication 12.
